# EUROPEAN PATENT SPECIFICATION

(11) **EP 2 696 102 B1**
(45) Date of publication and mention of the grant of the patent: **19.04.2017**
(21) Application number: 11776680.8
(22) Date of filing: 25.03.2011
(51) Int. Cl.: F16G 5/16

(54) **TRANSMISSION BELT**
ANTRIEBSBAND
COURROIE DE TRANSMISSION

(43) Date of publication of application: 12.02.2014
(73) Proprietor: TOYOTA JIDOSHA KABUSHIKI KAISHA, Toyota-shi, Aichi, 471-8571 (JP)
(72) Inventor: HARIMA, Kazunori, Toyota-shi, Aichi 471-8571 (JP); KOBAYASHI, Daisuke, Toyota-shi, Aichi 471-8571 (JP); HATTORI, Yuji, Toyota-shi, Aichi 471-8571 (JP); YOSHIDA, Michio, Toyota-shi, Aichi 471-8571 (JP)
(74) Representative: Winter, Brandl, Fürniss, Hübner, Röss, Kaiser, Polte - Partnerschaft mbB
(86) International application number: PCT/JP2011/057364
(87) International publication number: WO 2012/131841

(56) References cited:
- GB-A- 2 267 973
- JP-A- 62 035 137
- JP-A- 2008 223 956
- JP-A- 2009 204 103
- JP-U- H0 394 447
- JP-U- S5 828 141
- JP-U- 62 071 443
- JP-U- S63 119 953
- US-A- 4 610 648

## Description

### TECHNICAL FIELD

This invention relates to a driving belt formed by fastening a plurality of plate-like elements juxtaposed in a circular manner by a metal ring.

### BACKGROUND ART

A belt formed by juxtaposing a plurality of metal pieces called an "element" or a "block" in a circular manner, and by fastening the juxtaposing metal pieces by an endless carrier (called a "ring" or a "hoop") is known in the prior art to be used in a continuously variable transmission. The belt of this kind is configured to transmit the torque by a pushing force among the metal pieces thus juxtaposed to be contacted to one another. Specifically, the metal pieces existing in the groove of a drive pulley are sequentially pushed out of the groove by a rotation of the pulley while pushing the metal pieces in front of those metal pieces. The metal pieces thus being pushed forward are eventually entered into a groove of a driven pulley As a result, the torque of the drive pulley is transmitted to the driven pulley by such advancement of the metal pieces.

One example of the driving belt of this kind is disclosed in Japanese Patent Laid-Open No. 2001-304344. According to the teachings of Japanese Patent Laid-Open No. 2001-304344, a rocking edge is formed on a front face of the element in the proceeding direction at an intermediate level in a height direction of a pulley contact face. Meanwhile, according to a V-belt taught by Japanese Patent Laid-Open No. 2000-065153, a rocking edge is formed at a substantially same level as a winding surface to which a band is applied in a height direction of the V-belt.

According to the teachings of Japanese Patent Laid-Open No. 2001-304344, a moment acting on the element as a result of a tilting motion of the element at the rocking edge can be minimized. Therefore, according to the driving belt taught by Japanese Patent Laid-Open No. 2001-304344, a power loss can be minimized. Meanwhile, according to the teachings of Japanese Patent Laid-Open No. 2000-065153, the band will not slip on the winding surface of the V-type block even when the V-type block enters into a pulley so that friction loss can be prevented. However, in order to improve a torque capacity and durability of the driving belt of those kinds, number of layers of the layered ring has to be increased. Nonetheless, in the pulley at which a running radius (i.e., a pitch radius) of the belt is smaller than that of the other one, running radii of the layers of the belt applied thereto differ from one another. For this reason, running velocities of the layers of the belt become different from one another, and slippage and frictional loss are thereby caused among the layers of the belt. Such slippage and frictional loss may also occur between the belt and a saddle face of the element. As a result, a torque transmission efficiency of the belt has to be degraded. That is, it is difficult to improve the torque capacity and durability of the driving belt while preventing deterioration in the torque transmission efficiency of the driving belt. JP H 03 94447 U and JP S58 28141 U both disclose a belt according to the preamble of claim 1.

### DISCLOSURE OF THE INVENTION

The present invention has been conceived noting the technical problems thus far described, and its object is to improve the torque capacity and the durability of the driving belt while preventing deterioration in the torque transmission efficiency of the driving belt.

In order to achieve the above-mentioned object, according to the present invention, there is provided a driving belt comprising: a plurality of elements juxtaposed in a same orientation; and a ring, which is mounted on a saddle face of the element to fasten the elements in a circular manner. In the element, a rocking edge is formed in an inner circumferential side of the saddle face, and the saddle face is contacted with the adjoining element to serve as a fulcrum point of a tilting motion of the element. According to the driving belt of the present invention thus structured, at least one slit is formed radially inside of the saddle face in a radial direction of the ring to hold a sub ring that also fastens the elements in a circular manner.

According to the present invention, at least one of the slits is formed closer to the rocking edge than the saddle face, or formed on an extension of the rocking edge.

In addition, according to the present invention, a width of at least one of the slits is narrower than that of the saddle face or the other slit.

Specifically, according to the present invention, the ring includes a layered ring formed by stacking a plurality of rings in layers. On the other hand, the sub ring includes a single layered ring, and at least one sub ring is held in the slit.

Thus, according to the present invention, the driving belt is formed by annularly fastening the elements juxtaposed in a same orientation by the layered ring mounted on the saddle face of the element. As described, the element is provided with at least one slit formed inside of the saddle face in a radial direction of the ring, and the sub ring is held therein. Therefore, an array of the element can also be fastened by the sub ring held in the slit in addition to the layered ring mounted on the saddle face. That is, total number of the layers of the ring can be increased by thus using the sub ring. For this reason, the torque capacity of the driving belt can be increased and the durability of the driving belt can be enhanced. As also described, the sub ring held in the slit is situated closer to the rocking edge than the layered ring. That is, the friction between the sub ring and the slit is very small. Therefore, the friction and the power loss will not be increased even if the number of layers of the ring is increased so that the power transmission efficiency of the driving belt can be prevented from being deteriorated.

Thus, according to the present invention, the elements can also be fastened by the sub ring held in the slit. Therefore, alternatively, at least one of the layers of the layered ring mounted on the saddle face may be reduced by thus fastening the elements using the sub ring held in the slit. As a result, the number of contact points among the layers of the layered ring can be decreased so that the frictional loss in the layered ring can be reduced without decreasing the total number of the layers of the ring fastening the elements. Therefore, in this case, the power transmission efficiency of the driving belt can be improved by thus reducing the power loss in the layered ring, without degrading the durability and the torque capacity thereof. In addition to the above-explained advantage, since the slits is thus formed close to the rocking edge or on a level congruent with an extension of the rocking edge also in this case, the friction between the sub ring and the slit is very small. Therefore, deterioration in the power transmission efficiency of the driving belt resulting from friction loss can be minimized.

### BRIEF DESCRIPTION OF THE DRAWINGS

Fig. 1 is a front view showing one example of the element according to the present invention.
Fig. 2 is a view schematically showing a continuously variable transmission to which a present invention is applied.
Fig. 3 is a perspective view partially showing the driving belt to which the present invention is applied.
Fig. 4 is a side view showing one example of the element according to the present invention.
Fig. 5 is a front view showing another example of the element according to the present invention.
Fig. 6 is a front view showing still another example of the element according to the present invention.

### BEST MODE FOR CARRYING OUT THE INVENTION

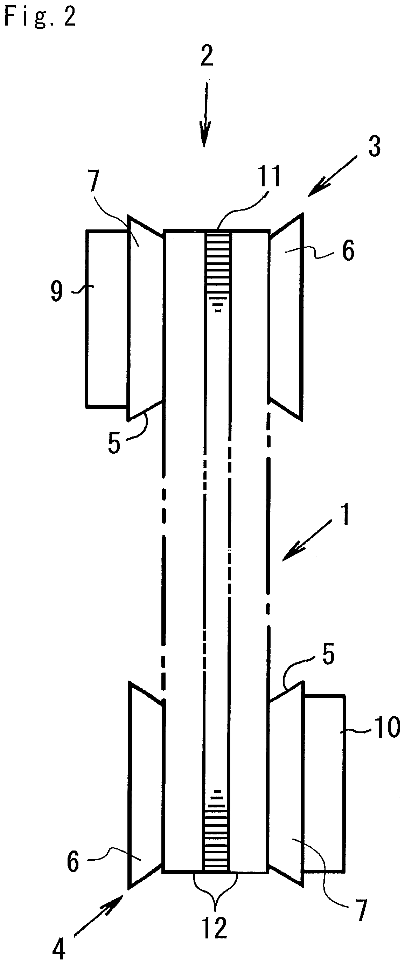

Next, examples of the present invention will be explained hereinafter. For example, a driving belt to which the present invention is applied is adapted to be used in a continuously variable transmission. Specifically, a groove whose cross-sectional shape is V-shape is formed on an outer circumference of the pulley of the continuously variable transmission, and the belt is applied to the groove of the pulley for the purpose of transmitting torque by a frictional force between the belt and pulleys. For example, as schematically shown in Fig. 2, a belt 1 is applied to a drive pulley 3 and a driven pulley 4 of the continuously variable transmission. Each pulley 3 and 4 comprises a pair of fixed sheave 6 and movable sheave 7 individually having a tapered face and being opposed to each other. Therefore, V-shaped groove 8 is formed between those sheaves 6 and 7, and a width of the groove 8 is varied by reciprocating the movable sheave 7 using actuators 9 and 10 such as hydraulic cylinder.

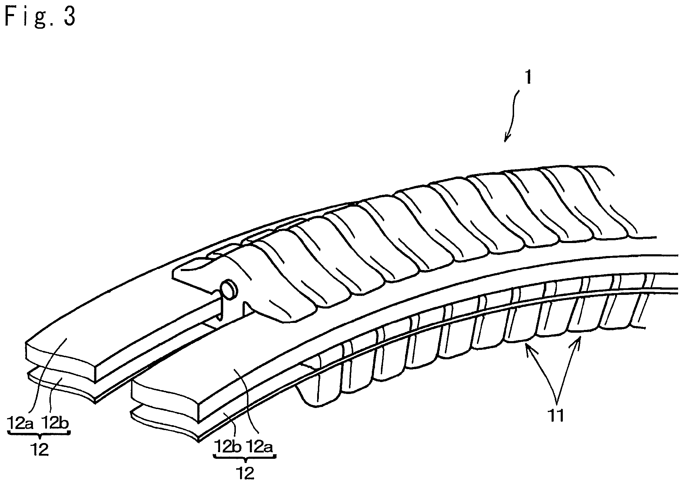

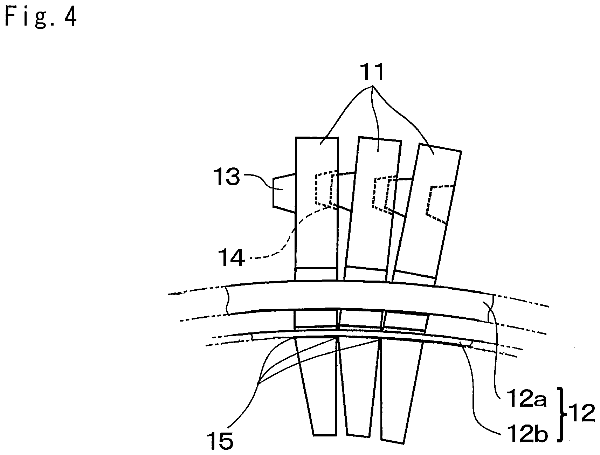

As shown in Fig. 3, the driving belt 1 according to the present invention is formed by fastening a plurality of elements 11 in a circular manner by rings 12a and 12b, and both side faces of the element 11 are tapered to be V-shaped. Fig. 4 shows an array of the element 11 used in the belt 1 shown in Fig. 3. Specifically, the element 11 is a plate-like member made of metal, and the elements 11 of same configuration are juxtaposed annularly in the same orientation. Therefore, some of the elements 11 are inevitably juxtaposed not parallel to one another, in other words, some of the elements 11 being juxtaposed are inevitably spread like a fan (i.e., radially) around a center of curvature of the belt 1.

For the purpose of positioning the juxtaposed elements 11 vertically and horizontally, as shown in Fig. 4, a protrusion 13 is formed on one of the faces of the element 11, and a hole 14 into which the protrusion 13 is inserted loosely is formed on the opposite face. Specifically, the hole 14 is formed by partially depressing one of the faces of the element 11, and the protrusion 13 is thereby protruded from the opposite face of the element 11.

In order to allow the element 11 to be tilted in a fan-like fashion while being contacted with the adjoining element 11, a rocking edge 15 is formed on the element 11. Specifically, the rocking edge 15 is a boundary or a boundary area at which the thickness of the element 11 is changed, and the rocking edge 15 is formed at a substantially center of the element 6 in the height direction while extending in a width direction of the element 11 (i.e., in a direction parallel with a rotational center axis of the pulley). In case the driving belt 1 is applied to the pulleys 3 and 4, a circumferential length of an array of the elements 11 is longer at a radially outer side of the element 11 (that is, at an outer circumferential side of the driving belt 1). Therefore, clearances between the elements 11 around the pulley are widened at the radially upper portion thereof (i.e., at the outer circumferential side of the belt 1). To the contrary, the circumferential length of the array of the elements 11 is shorter at a radially inner side of the element 11 (that is, at an inner circumferential side of the driving belt 1). Therefore, the clearances between the elements 11 around the pulley are narrowed at the radially inner portion thereof. For this reason, a thickness of the radially inner portion of the element 11 is reduced gradually toward a radially innermost portion thereof, and the portion at which the thickness of the element 11 is thus changed serves as the rocking edge 15. Thus, the elements 11 are allowed to be tilted at the rocking edge 15 to spread in the fan-like fashion, that is, a pitching of the elements 11 is allowed by the rocking edge 15. In addition, the rocking edge 15 is necessary to be formed only on one of the faces of the element 11. However, the location of the rocking edge 15 should not be limited to the above-explained location. For example, the rocking edge 15 may also be formed on the element 11 at a level predetermined distance away from a reference position. For this purpose, the protrusion 13 and the hole 14, and a flank face configured to transmit the torque between the element 11 and the pulley 3 or 4 may be used as the reference position to determine the level of the rocking edge 15.

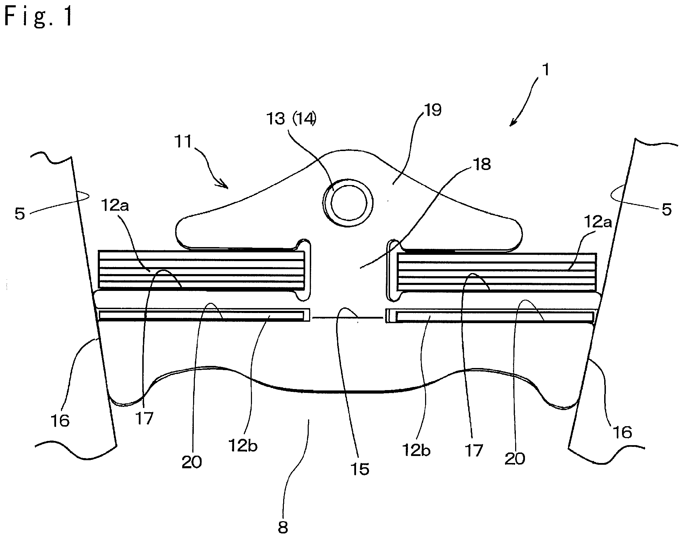

As shown in Fig. 1, both of lateral faces (i.e., flank faces) 16 of the element 11 are contacted with an inner face 5 of a groove 8 of the pulley 3 or 4 to transmit the torque. For this purpose, the lateral faces 16 are tapered to be parallel with the inner face 5 of the groove 8.

As also shown in Fig. 1, a saddle face 17 is formed in the element 11, and a layered ring 12a is placed on the saddle face 17. Specifically, a width of the saddle face 17 is wider than that of the layered ring 12a. The layered ring 12a is formed by stacking thin metal rings in layers, and disposed on the saddle face 17 to fasten the array of the elements 11. In the example shown in Fig. 1, the saddle face 17 is formed on both sides of a neck portion 18, and the layered ring 12a is arranged on each saddle face 17. According to the driving belt 1 of the present invention, the layered rings 12a are thus disposed on the saddle faces 17 to fasten the array of element 11 in a circular manner, and to hold the elements 11 not to deviate outwardly in the radial direction. However, in addition to the above-mentioned functions, the rings 12a also function to draw the elements 11 being discharged from the groove 8 of the pulley 3 or 4. For this purpose, in order to prevent the layered rings 12a from deviating radially outwardly from the elements 11, a head portion 19 is formed in the element 11 to hold the layered rings 12a in the space between the head portion 19 and each saddle face 17.

According to the present invention, the element 11 is further provided with a slit (or a second saddle face) 20 formed on the inner side of the saddle face 17 in the radial direction of the driving belt 1. Specifically, the slit 20 is formed in parallel with the saddle face 17 at a level close to the rocking edge 15 as much as possible. As shown in Fig. 4, the thickness of the element 11 is thicker at the portion of radially outer side of the rocking edge 15, and gradually thinned from the rocking edge 15 toward the radially innermost portion thereof. According to the example shown in Fig. 4, the slit portions 20 extend from both width ends of the rocking edge 15 outwardly in the width direction. In the slit portions 20 thus formed, a single layered sub ring 12b is individually inserted to fasten the array of the elements 11 in a circular manner. Alternatively, the slit portion 20 may also be formed slightly outside or inside of the rocking edge 15 in the radial direction. Thus, at least one layer of the sub ring is held in the slit 20.

According to the present invention, for example, the driving belt 1 can be formed by fastening the array of the elements 11 by the layered rings 12a on the saddle faces 17, and additionally by the sub rings 12b in the slits 20. As described, when the elements 11 in the straight region of the driving belt 1 thus formed enter into the groove 8 of the pulley 3 or 4 whose running radius is reduced, the elements 11 in the groove 8 are spread like a fan (i.e., radially). However, according to the present invention, the slits 20 are situated at substantially same level as the rocking edge 15. Therefore, moment acting on the sub ring 12b can be reduced so that slippage between the sub ring 12b and the slit 20 can be minimized. For this reason, the frictional loss between the sub ring 12b and the slit 20 can be minimized. In this case, therefore, the torque capacity of the driving belt 1 can be increased and the durability thereof can be enhanced without degrading the torque transmission efficiency.

Alternatively, one of the layers forming the layered ring 12a may be removed by thus fastening the array of the elements 11 additionally by the sub ring 12b held in the slit 20. In this case, the number of the layers of the layered ring 12a which may cause the slippage therein can be reduced. Therefore, slippage in the layered ring 12a can be reduced so that the frictional loss in the layered ring 12a resulting from such slippage can be minimized. In addition to the above-explained advantage, since the slits 20 are situated at substantially same level as the rocking edge 15, the moment acting on the sub ring 12b can be reduced so that slippage between the sub ring 12b and the slit 20 can be minimized. For this reason, the frictional loss between the sub ring 12b and the slit 20 can be minimized. In this case, therefore, the torque transmission efficiency of the driving belt 1 can be improved without degrading the torque capacity and durability thereof.

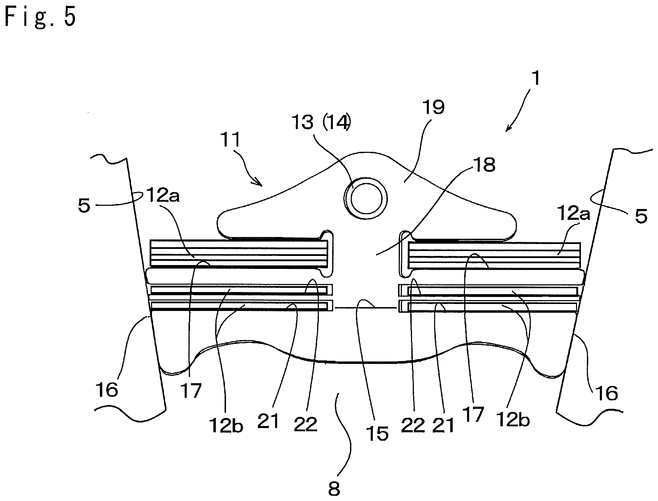

Fig. 5 is a front view showing another example of the present invention. As shown in Fig. 5, plurality of slits may be formed on each side of the neck portion 18. Specifically, according to the example shown in Fig. 5, a slit 21 and a slit 22 are formed on each side of the neck portion 18. The slits 21 are formed at substantially same level as the rocking edge 15, that is, formed as an extension of the rocking edge 15. Meanwhile, the slit 22 is formed individually between the saddle face 17 and the slit 21 in parallel therewith. In this case, the sub ring 12 is inserted into each the slit 21 and 22.

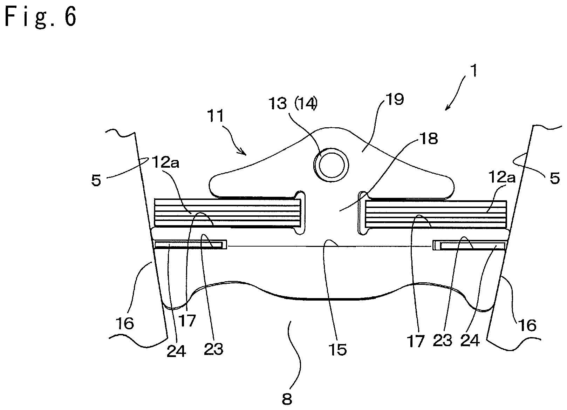

Fig. 6 is a front view showing still another example of the present invention. As shown in Fig. 6, a width of the slit may be reduced to be narrower than that of the saddle face 17. Alternatively, a width of one of the slit portions may be reduced to be narrower then that of the other slit portion. In the example shown in Fig. 6, slit portions 23 are also formed at substantially same level as the rocking edge 15 or formed as an extension of the rocking edge 15. However, a width of each slit 23 is approximately half as the width of the saddle face 17. In this example, therefore, a width of the sub ring 12b is reduced to be approximately half as that of the layered ring 12a disposed on the saddle face 17.

In short, according to the present invention, the element comprises at least one slit formed radially inside of the saddle face, and at least one sub ring held in the slit thus formed.

In the examples thus far explained, the present invention is applied to the driving belt configured to transmit the torque of the pulley. However, the present invention may also be applied to a driving belt configured to transmit the torque by being engaged with a rotary member such as a driving belt used in a belt conveyer. In addition, an application of the driving belt according to the present invention should not be limited to vehicles. For example, the driving belt according to the present invention may also be used in aircrafts, marine vessels, industrial machineries and so on.

## Claims

1. A driving belt (1), comprising:
a plurality of elements (11) juxtaposed in a same orientation; and
a ring (12a), which is mounted on a saddle face (17) of the element (11) to fasten the elements (11) in a circular manner;
wherein a rocking edge (15) is formed in an inner circumferential side of the saddle face (17) of the element (11), which is contacted with the adjoining element (11) to serve as a fulcrum point of a tilting motion of the element (11), **characterized in that**:
at least two slits (20, 21, 22, 23) are formed on the innner side of the saddle face in the radial direction of the drive belt and in parallel with the saddle face (17) in a radial direction of the ring (12) to hold at least one layer of a sub ring (12b) that fastens the elements (11) in a circular manner; **characterized in that**, the slits (20, 21, 22, 23) are formed closer to the rocking edge (15) than the saddle face (17), or formed on an extension of the rocking edge (15).

2. The driving belt (1) as claimed in claim 1, wherein a width of at least one of the slits (20, 21, 22, 23) is narrower than that of the saddle face (17) or the other slit (20, 21, 22, 23).

3. The driving as claimed in any of claims 1 or 2,
wherein the ring (12a) includes a layered ring formed by stacking a plurality of rings (12a) in layers;
wherein the sub ring (12b) includes a single layered ring; and
wherein at least one sub ring (12b) is held in the slit (20, 21, 22, 23).

## Patentansprüche

1. Antriebsband (1) mit:
mehreren Elementen (11), die in einer gleichen Orientierung überlagert sind; und
einem Ring (12a), der auf einer Sattelfläche (17) der Elemente (11) montiert ist, um die Elemente (11) in einer kreisförmigen Weise zu befestigen;
wobei eine Kippkante (15) in einer Innenumfangsseite der Sattelfläche (17) des Elements (11) gebildet ist, die das benachbarte Element (11) berührt, um als ein Drehpunkt einer Kippbewegung des Elements (11) zu dienen, **dadurch gekennzeichnet, dass**:
zumindest zwei Schlitze (20, 21, 22, 23) auf der Innenseite der Sattelfläche in der Radialrichtung des Antriebsgurts und parallel zu der Sattelfläche (17) in einer Radialrichtung des Rings (12) gebildet sind. um zumindest eine Lage eines Unterrings (12b) zu halten, der die Elemente (11) in kreisförmiger Weise befestigt; **dadurch gekennzeichnet, dass** die Schlitze (20, 21, 22, 23) näher an der Kippkante (15) als die Sattelfläche (17) gebildet sind, oder auf einer Verlängerung der Kippkante (15) gebildet sind.

2. Antriebsband (1) nach Anspruch 1, wobei eine Breite mindestens eines der Schlitze (20, 21, 22, 23) geringer als die der Sattelfläche (17) oder des anderen Schlitzes (20, 21, 22, 23) ist.

3. Antriebsband nach Anspruch 1 oder 2,
wobei der Ring (12a) einen Lagen aufweisenden Ring umfasst, der gebildet ist, indem eine Vielzahl von Ringen (12a) in Lagen aufeinandergeschichtet werden;
wobei der Unterring (12b) einen einzellagigen Ring umfasst; und
wobei mindestens ein Unterring (12b) im Schlitz (20, 21, 22, 23) gehalten ist.

## Revendications

1. Courroie de transmission (1) comprenant :
une pluralité d'éléments (11) juxtaposés dans une même orientation ; et
une bague (12a) qui est montée sur une face de selle (17) de l'élément (11) pour fixer les éléments (11) d'une manière circulaire ;
dans laquelle un bord basculant (15) est formé dans un côté circonférentiel interne de la face de selle (17) de l'élément (11), qui est en contact avec l'élément (11) attenant pour servir de point de pivot d'un mouvement d'inclinaison de l'élément (11), **caractérisée en ce que** :
au moins deux fentes (20, 21, 22, 23) sont formées sur le côté interne de la face de selle dans la direction radiale de la courroie de transmission et parallèlement à la face de selle (17) dans une direction radiale de la bague (12) pour maintenir au moins une couche d'une bague auxiliaire (12b) qui fixe les éléments (11) d'une manière circulaire ; **caractérisée en ce que** :
les fentes (20, 21, 22, 23) sont formées plus à proximité du bord basculant (15) que la face de selle (17), ou formées sur une extension du bord basculant (15).

2. Courroie de transmission (1) selon la revendication 1, dans laquelle une largeur d'au moins l'une des fentes (20, 21, 22, 23) est plus étroite que celle de la face de selle (17) ou de l'autre fente (20, 21, 22, 23).

3. Entraînement selon l'une quelconque des revendications 1 ou 2,
dans laquelle la bague (12a) comprend une bague déposée en couche formée en empilant une pluralité de bagues (12a) en couches ;
dans lequel la bague auxiliaire (12b) comprend une bague déposée en couche unique ; et
dans lequel au moins une bague auxiliaire (12b) est maintenue dans la fente (20, 21, 22, 23).
